# EUROPEAN PATENT APPLICATION

(11) **EP 3 739 296 A1**
(43) Date of publication of application: **18.11.2020**
(21) Application number: 19810501.7
(22) Date of filing: 11.04.2019
(51) Int. Cl.: G01C 21/34

(54) **TIME WINDOW-BASED MULTI-VEHICLE PATH PLANNING METHOD, SYSTEM, AND DEVICE, AND STORAGE MEDIUM**

(30) Priority: 01.06.2018 CN 201810556870
(71) Applicant: Shanghai Westwell Information And Technology Co., Ltd., Shanghai 200050 (CN)
(72) Inventor: TAN, Limin, Shanghai 200050 (CN); ZHANG, Bo, Shanghai 200050 (CN); GU, Wenchao, Shanghai 200050 (CN); YU, Mingqi, Shanghai 200050 (CN); XIA, Chen, Shanghai 200050 (CN); HOU, Yimeng, Shanghai 200050 (CN); LV, Hao, Shanghai 200050 (CN)
(74) Representative: Mewburn Ellis LLP
(86) International application number: PCT/CN2019/082338
(87) International publication number: WO 2019/228081

(57) **Abstract**

Provided are a time window-based multi-vehicle path planning method, system, and device, and a storage medium. The method comprises: traversing each edge between adjacent nodes in a road network node map, and obtaining the passage time of passing each edge, and a shortest estimated distance between any two points in the map (S101); obtaining a current access list of a first vehicle sequentially passing each node from a starting node and a past access list (S102); according to respective times of occupying nodes and edges in past access lists of all vehicles having path planning completed, updating a lock time window of the nodes and a lock time window of the edges (S103); obtaining a current access list of the next vehicle, which needs path planning, sequentially passing each node from the starting node and a past access list; if the time interval of a legal time window is included in the time interval of the lock time window of the nodes, discarding the node; and sequentially outputting predecessor nodes in the past access list as path planning (SI04). The path planning method can effectively prevent conflicts between different vehicles in multi-vehicle path planning, and improve the passage efficiency and security.

## Description

### TECHNICAL FIELD

The present disclosure relates to the field of path planning, and more particularly, to a time window-based multi-vehicle path planning method, system, device and a storage medium.

### BACKGROUND

All the time, multi-vehicle path planning has been one of the main research topics in the field of cluster robots. At present, most of the more popular multi-vehicle path planning algorithms have relatively strict restrictions on rules for the vehicle path, such as only allowing one-way traveling, restricting the activity areas of the vehicle, etc., to reduce the amount of calculation and avoid the deadlock problem of the vehicle. However, these algorithms cause many unnecessary restrictions on the vehicle driving, and the utilization efficiency of the vehicle is reduced.

Therefore, the present disclosure provides a time window-based multi-vehicle path planning method, system, device, and storage medium.

### SUMMARY

In view of the issues in the prior art, an object of the present disclosure is to provide a time window-based multi-vehicle path planning method, system, device, and storage medium, which can effectively prevent different vehicles from conflicting in multi-vehicle path planning. Thus, the passing efficiency of the road network is improved and the safety is guaranteed.

An embodiment of the present disclosure provides a time window-based multi-vehicle path planning method, which includes the following steps.

S101, traversing each edge between adjacent nodes in a road network node map is traversed to obtain a passing time of passing through each edge and a shortest estimated distance between any two nodes in the map.

S102, according to a starting node and a target node of a first vehicle, move to the target node from the starting node through the edge along a path of a corresponding shortest estimated distance, to obtain a current access list and a historical access list of sequentially passing through each node from the starting node. The current access list is used to record a time of arrival at the target node at the earliest, a legal time window, and a previous node based on a current node of the vehicle. The legal time window is a time interval. Each previous node in the historical access list is output sequentially as path planning of the first vehicle.

S103, a locking time window of the node and a locking time window of the edge are updated according to respective times of occupying the node and the edge in the historical access lists of all vehicles having path planning completed. Each of the locking time window of the node and the locking time window of the edge is one or more time intervals respectively.

S104, according to a starting node and a target node for a next vehicle for which the path planning is required and the locking time windows of the nodes obtained in the step S103, move to the target node from the starting node to obtain a current access list and a historical access list of sequentially passing through each node from the starting node. The current access list is used to record a time of arrival at the target node at the earliest, a legal time window, and a previous node based on the current node for the vehicle. The legal time window is a time interval or a union set of a plurality of time intervals. If the time interval of the legal time window is included in a time interval of the locking time window of the node, then this node is discarded. Each previous node in the historical access list is output sequentially as path planning.

S105, it is determined whether there is yet a vehicle for which the path planning is required; if yes, then returning to the step S104; if not, then performing step S106; and
S106, end.

Preferably, in the step S102, the first vehicle moves to the target node through the edge along the corresponding shortest estimated distance from the starting node by a plurality of iterations. And each of the iterations includes the following steps.

S1021, it is determined whether the current node is the target node or not; if yes, then performing step S1025; if not, then performing step S1022.

S1022, the current node in the current access list is taken as a previous node, and the relative access information is removed from the current access list and added into the historical access list of this iteration.

S1023, access information of a node adjacent to the current node that is not included in the historical access list is added into the current access list. The access information includes an estimated time of arrival at the target node at the earliest, a legal time window and a previous node of the current node.

S1024, a node having an estimated time of arrival at the target node always at the earliest is selected from the current access list, and taken as the current node, then returning to the step S1021.

S1025, each previous node in the historical access list is output sequentially as the path planning of the first vehicle, and then the iteration is ended.

Preferably, in the step S102, the time interval of the legal time window is [g, h], where the g is a time of arrival at the current node at the earliest for the vehicle, and the h is a legal time of departure from the current node at the latest for the vehicle. The g in the legal time window of each current node has a value equal to a time moving from the previous node to the node through an edge adjacent to the previous node. The h has a value equal to positive infinity.

Preferably, in the step S103, an interval of the locking time window of the node is [max(a-c, 0), b+c], where the a is a starting time when occupation of the node is started, the b is an end time when occupation of the node is ended, and the c is a preset time resolution, 0≤c≤10.

An interval of the locking time window of the edge is [max(0, d-e), f], where the d is a starting time when occupation of the node is started, the e is a passing time required for passing through the edge, and the f is a terminal time when occupation of the edge is terminated.

Preferably, in the step S103, a union set of all respective times of occupying the nodes in the historical access list of all vehicles having path planning completed is taken as the updated locking time windows of the nodes. A union set of all respective times of occupying the edges in the historical access list of all vehicles having path planning completed is taken as the updated locking time windows of the edges.

Preferably, in the step S104, the vehicle moves from the starting node to the target node by a plurality of iterations, and each of the iterations includes the following steps.

S1041, it is determined whether the current node is the target node or not; if yes, then performing step S1045; if not, then performing step S1042.

S1042, the current node in the current access list is taken as a previous node, and the relative access information is removed from the current access list and added into the historical access list of this iteration.

S1043, access information related to a node adjacent to the current node is obtained and added into the current access list. The access information includes an estimated time of arrival at the target node at the earliest, a legal time window, and a previous node of the current node. The legal time window is a time interval or a union set of a plurality of time intervals. If the time interval of the legal time window is included in a time interval of the locking time window of the node, then the corresponding current node is discarded.

S1044, a node having an estimated time of arrival at the target node always at the earliest is selected from the current access list, and taken as the current node, then returning to the step S1041.

S1045, each previous node in the historical access list is output sequentially as the path planning of the vehicle, and then the iteration is ended.

Preferably, the step S1042 further includes: if there is no solution for the time interval of the legal time window of the current node, then the current node is deleted from the current access list.

Preferably, in the step S1042, a time interval of the legal time window of the current node is obtained according to the starting node, the target node, and the time of arrival at the current node at the earliest of the vehicle. There is one or more intervals [ji,ki], i=1,2,3...n, in the time interval, where the n is the number of the intervals,.

A method of calculating the time interval includes: firstly, obtaining the legal time window of the previous node of the current node, the locking time window of the edge adjacent to the current node and the previous node, and the locking time window of the current node; then, calculating a difference set between the locking time window of the current node and the difference set between the legal time window of the previous node and the locking time window of the edge adjacent to the current node and the previous node.

Preferably, in the step S1042, if there is no legal time window in the legal time window of the current node, then the current node is deleted from the current access list.

A time window-based multi-vehicle path planning system for implementing the above time window-based multi-vehicle path planning method is provided in an embodiment of the present disclosure, which includes:
a node information acquisition module, configured to traverse each edge between adjacent nodes in a road network node map, to obtain a passing time of passing through each edge and a shortest estimated distance between any two nodes in the map;
a first vehicle path planning module, configured to: move, according to a starting node and a target node for a first vehicle, from the starting node to the target node through the edge along a path of a corresponding shortest estimated distance, to obtain a current access list and a historical access list of sequentially passing through each node from the starting node, the current access list being used to record a time of arrival at the target node at the earliest, a legal time window, and a previous node based on a current node for the vehicle, the legal time window being a time interval; and output each previous node in the historical access list sequentially as path planning of the first vehicle;
a locking time window establishing module, configured to update, according to respective times of occupying the node and the edge in historical access lists of all vehicles having path planning completed, a locking time window of the node and a locking time window of the edge, each of the locking time window of a node and the locking time window of a edge being one or more time intervals respectively;
a subsequent vehicle path planning module, configured to: move, according to a starting node and a target node for a next vehicle requiring path planning and the locking time window of the node obtained in the locking time window establishing module, from the starting node to the target node, to obtain a current access list and a historical access list of sequentially moving through each node from the starting node, the current access list being used to record a time of arrival at the target node at the earliest, a legal time window, and a previous node based on a current node for the vehicle, the legal time window being a time interval or a union set of a plurality of time intervals; discard the node, if the time interval of the legal time window is included in a time interval of the locking time window of the node; output each previous node in the historical access list sequentially as path planning; and execute repeatedly until the path planning have been completed for all vehicle.

A time window-based multi-vehicle path planning device is further provided in an embodiment of the present disclosure, which includes:
a processor; and
a memory, on which executable instructions of the processor are stored.

The processor is configured to implement the steps of the above time window-based multi-vehicle path planning method by executing the executable instructions.

A computer readable storage medium configured to store program is further provided in an embodiment of the present disclosure. The steps of the above time window-based multi-vehicle path planning method are implemented when the program is executed.

The time window-based multi-vehicle path planning method, system, device, and storage medium of the present disclosure can effectively prevent different vehicles from conflicting in multi-vehicle path planning. Thus, the passing efficiency of the road network is improved and the safety is guaranteed.

### BRIEF DESCRIPTION OF THE DRAWINGS

Other features, purposes, and advantages of the present disclosure will become more apparent by reading the detailed description of the non-limiting embodiments with reference to the following drawings.
FIG 1 is a flowchart of a time window-based multi-vehicle path planning method according to one embodiment of the present disclosure.
FIGS. 2-10 are schematic diagrams of implementation status of a time window-based multi-vehicle path planning method according to one embodiment of the present disclosure.
FIG 11 is a schematic structure diagram of a time window-based multi-vehicle path planning system according to one embodiment of the present disclosure.
FIG 12 is a schematic structure diagram of a time window-based multi-vehicle path planning device according to one embodiment of the present disclosure.
FIG. 13 is a schematic structural diagram of a computer readable storage medium according to one embodiment of the present disclosure.

### DETAILED DESCRIPTION

Exemplary embodiments will now be described more comprehensive with reference to the drawings. However, these exemplary embodiments can be implemented in various forms and should not be construed as being limited to the embodiments described herein. Rather, these embodiments are provided such that the present disclosure will be comprehensive and complete, and the concept of the exemplary embodiments will be fully communicated to those skilled in the art. The same reference numerals in the drawings denote the same or similar structures, and thus their repeated description will be omitted.

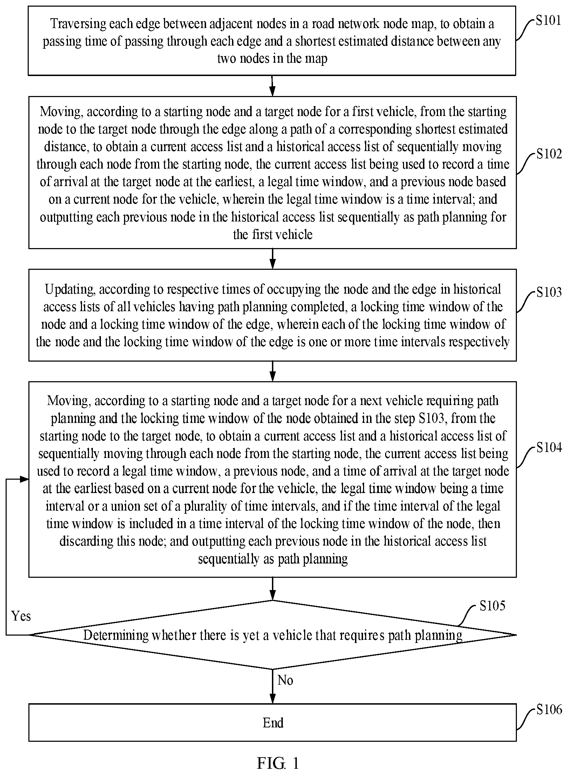

FIG 1 is a flowchart of a time window-based multi-vehicle path planning method according to one embodiment of the present disclosure. As shown in FIG.1, a time window-based multi-vehicle path planning method is provided in an embodiment of the present disclosure, and the method includes the following steps.

At S101, each edge between adjacent nodes in a road network node map is traversed to obtain a passing time of passing through each edge and a shortest estimated distance between any two nodes in the map.

At S102, according to a starting node and a target node for a first vehicle, move from the starting node to the target node through the edge along a path of a corresponding shortest estimated distance, to obtain a current access list and a historical access list of sequentially passing through each node from the starting node. The current access list is used to record a time of arrival at the target node at the earliest, a legal time window, and a previous node based on a current node for the vehicle. The legal time window is a time interval. Each previous node in the historical access list is output sequentially as path planning of the first vehicle. In the step S102, the time interval of the legal time window is [g, h], where the g is a time of arrival at the current node at the earliest for the vehicle, and the h is a legal time of departure from the current node at the latest for the vehicle. The g in the legal time window of each current node has a value equal to a time moving from the previous node to this node through an edge adjacent to the previous node. The h has a value equal to positive infinity.

In a preferred scheme, in the step S102, the first vehicle moves to the target node along the corresponding shortest estimated distance from the starting node through the edge by a plurality of iterations. And each of the iterations includes the following steps.

At S1021, it is determined whether the current node is the target node; if yes, then performing step S1025; if not, then performing step S1022.

At S1022, the current node in the current access list is taken as a previous node, and the relative access information is removed from the current access list and added into the historical access list of this iteration.

At S1023, access information of a node adjacent to the current node that is not included in the historical access list is added into the current access list. The access information includes an estimated time of arrival at the target node at the earliest a legal time window and a previous node of the current node.

At S1024, a node having an estimated time of arrival at the target node always at the earliest is selected from the current access list, and taken as the current node, then returning to the step S1021.

At S1025, each previous node in the historical access list is output sequentially as the path planning of the first vehicle, and then the iteration is ended.

At S103, a locking time window of the node and a locking time window of the edge are updated according to respective times of occupying the node and the edge respectively in the historical access lists of all vehicles having path planning completed. Each of the locking time window of the node and the locking time window of the edge is one or more time intervals respectively. In a preferred scheme, in the step S103, an interval of the locking time window of the node is [max(a-c, 0), b+c], where the a is a starting time when occupation of the node is started, the b is an end time when occupation of the node is ended, and the c is a preset time resolution, 0≤c≤10. An interval of the locking time window of the edge is [max(0, d-e), f], where the d is a starting time when occupation of the node is started, the e is a passing time required for passing through the edge, and the f is a terminal time when occupation of the edge is terminated. In a preferred scheme, in the step S103, a union set of all the respective times of occupying the nodes in the historical access list of all vehicles having path planning completed is taken as the updated locking time window of the node. A union set of all respective times of occupying the edges in the historical access list of all vehicles having path planning completed is taken as the updated locking time window of the edge. The basic idea by recording the time window-based multi-vehicle path planning of the present disclosure is to calculate the shortest path to the destination for each of the vehicles in sequence, record the times at which the vehicles access the nodes, and then superimpose all the paths and the access times to prevent the vehicles from conflicting during driving.

At S104, according to a starting node and a target node for a next vehicle requiring path planning and the locking time windows of the nodes obtained in the step S103, move to the target node from the starting node to obtain a current access list and a historical access list of sequentially passing through each node from the starting node. The current access list is used to record a time of arrival at the target node at the earliest, a legal time window, and a previous node based on a current node for the vehicle. The legal time window is a time interval or a union set of a plurality of time intervals. If the time interval of the legal time window is included in a time interval of the locking time window of the node, then this node is discarded. Each previous node in the historical access list is output sequentially as path planning.

In a preferred scheme, in the step S104, the vehicle moves from the starting node to the target node by a plurality of iterations, and each of the iterations includes the following steps.

At S1041, It is determined whether the current node is the target node or not; if yes, then performing step S1045; if not, then performing step S1042.

At S1042, the current node in the current access list is taken as a previous node, and the relative access information is removed from the current access list and added into the historical access list of this iteration. The step S1042 further includes: if there is no solution for the time interval of the legal time window of the current node, then the current node is deleted from the current access list. In a preferred scheme, a time interval of the legal time window of the current node is obtained according to the starting node, the target node, and the time of arrival at the current node at the earliest of the vehicle. There is one or more intervals [jᵢ, kᵢ], i=1,2,3...n, where the n is the number of the intervals in the time interval. A method for calculating the time interval includes: firstly, obtaining the legal time window of the previous node of the current node, the locking time window of the edge adjacent to the current node and a previous node, and the locking time window of the current node; then, calculating a difference set between the locking time window of the current node and the difference set between the legal time window of the previous node and the locking time window of the edge adjacent to the current node and the previous node. In a preferred scheme, in the step S1042, if there is no legal time window in the legal time window of the current node, then the current node is deleted from the current access list. It is not necessary to continue the calculation for the node that is in conflict with the lock time window.

At S1043, access information related to a node adjacent to the current node is obtained and added into the current access list. The access information includes an estimated time of arrival at the target node at the earliest, a legal time window, and a previous node of the current node. The legal time window is a time interval or a union set of a plurality of time intervals. If the time interval of the legal time window is included in a time interval of the locking time window of the node, then the corresponding current node is discarded.

At S1044, a node having an estimated time of arrival at the target node always at the earliest is selected from the current access list, and taken as the current node, then returning to the step S1041. If the target node is obtained after a plurality of iterations, the path planning of the present disclosure is basically completed. The path represented by the found previous nodes is a completely safe path that will not conflict with the vehicles previously planned.

At S1045, each previous node in the historical access list is output sequentially as the path planning of the vehicle, and then the iteration is ended. Each of the safe previous nodes is sequentially output such that the path planning of the vehicle can avoid the path planning of the previously planned vehicles, which can be implemented as the result of the time window-based multi-vehicle path planning method of the present disclosure.

S105, it is determined whether there is yet a vehicle that needs path planning; if yes, then returning to step S104; if not, then performing step S106. Each of the vehicles is performed the path planning sequentially by the processes of the step S104, such that the legal time window does not conflict with the locked time window of the node, thus the path of each of the vehicles can safely avoid the preceding vehicles.

S106, end.

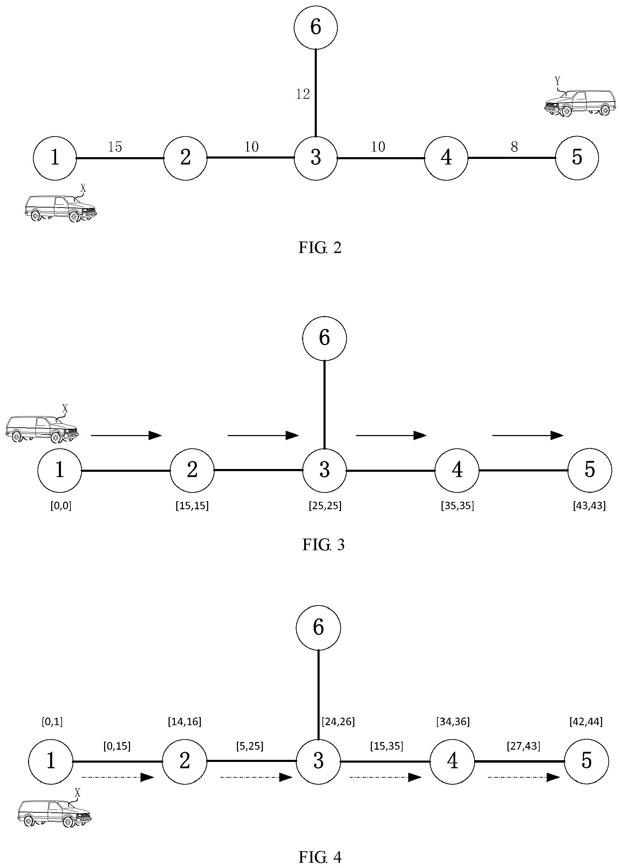

FIGS. 2 to 10 are schematic diagrams of implementation status of a time window-based multi-vehicle path planning method according to one embodiment of the present disclosure. An embodiment of the present disclosure is described in detail below with reference to FIGS. 2 to 10.

As shown in FIG. 2, there are 6 nodes in the network node map, which are node 1, node 2, node 3, node 4, node 5, and node 6, respectively. Each edge between adjacent nodes is traversed in a road network node map, to obtain a passing time of passing through each edge and a shortest estimated distance between any two nodes in the map. In this embodiment, the passing time between the node 1 and the node 2 is 15 minutes, the passing time between the node 2 and the node 3 is 10 minutes, the passing time between the node 3 and the node 4 is 10 minutes, the passing time between the node 3 and the node 6 is 12 minutes, and the passing time between the node 4 and the node 5 is 8 minutes. A vehicle X needs to travel from the node 1 to the node 5, and a vehicle Y needs to travel from the node 5 to the node 1.

Preset estimated times to the node 5 from each node are as follows: the node 1: 43 minutes; the node 2: 28 minutes; the node 3: 18 minutes; the node 4: 8 minutes; and the node 6: 30 minutes.

Preset estimated times to the node 1 from each node are as follows: the node 2: 15 minutes; the node 3: 25 minutes; the node 4: 35 minutes; the node 5: 43 minutes; and the node 6: 37 minutes.

As shown in FIG. 3, moving to the target node (the node 5) along a path of a corresponding shortest estimated distance from the starting node (the node 1) through the edges, according to a starting node and a target node for the vehicle X, a current access list and a historical access list of sequentially moving through each node from the starting node are obtained. The current access list is used to record a legal time window, a previous node, and a time of arrival at the target node at the earliest based on the current node for the vehicle X. The legal time window is a time interval. Each previous node in the historical access list is output sequentially as the path planning of the vehicle X.

At present, the time window is empty, and there is no need to consider the locking situation. The process of planning for the vehicle X is as follows:

### The process of the first iteration:

The current node (none) in the current access list is taken as a previous node. The access information related to the current node (none) is removed from the current access list and added into the historical access list of this iteration. As a result, the historical access list is empty when the access ends.

The access information of nodes adjacent to the current node which is not included in the historical access list is added into the current access list. The access information includes an estimated time of arrival at the target node at the earliest, a legal time window and a previous node of the current node. That is: node 1: [0, INF]; estimated earliest arrival time: 43 minutes; previous node: null; where the INF in the present disclosure refers to infinity great.

The node having an estimated time of arrival at the target node always at the earliest is selected from the current access list, and taken as the current node. The current node is the node 1.

Therefore, after the first iteration finished, the current access list and the historical access list are as follows:
The current access list:
Node 1: [0, INF]; estimated earliest arrival time: 43 minutes; previous node: null.

The historical access list is empty.

### The process of the second iteration:

The current node in the current access list is taken as a previous node. The access information related to the current node is removed from the current access list and added into the historical access list of this iteration. Then, "node 1: [0, INF]; estimated earliest arrival time: 43 minutes; previous node: null" is added into the historical access list of this iteration.

The access information of nodes adjacent to the current node which is not included in the historical access list is added into the current access list. The access information includes an estimated time of arrival at the target node at the earliest, a legal time window and a previous node of the current node. That is, node 2: [15, INF]; estimated earliest arrival time: 43 minutes; previous node: node 1.

The node having an estimated time of arrival at the target node always at the earliest is selected from the current access list, and taken as the current node. The current node is the node 2.

Therefore, after the second iteration finished, the current access list and the historical access list are as follows:
The current access list:
Node 2: [15, INF]; estimated earliest arrival time: 43 minutes; previous node: node 1.

The historical access list:
Node 1: [0, INF]; previous node: null.

### The process of the third iteration:

The current node in the current access list is taken as a previous node. The access information related to the current node is removed from the current access list and added them into the historical access list of this iteration; then, "node 2: [15, INF]; estimated earliest arrival time: 43 minutes; previous node: node 1" is added into the historical access list of this iteration.

The access information of nodes adjacent to the current node which is not included in the historical access list is added into the current access list, The access information includes an estimated time of arrival at the target node at the earliest, a legal time window and a previous node of the current node. That is, node 3: [25, INF]; estimated earliest arrival time: 43 minutes; previous node: node 2.

The node having an estimated time of arrival at the target node always at the earliest is selected from the current access list, and taken as the current node. The current node is the node 3.

Therefore, after the third iteration finished, the current access list and the historical access list are as follows:
The current access list:
Node 3: [25, INF]; estimated earliest arrival time: 43 minutes; previous node: node 2.

The historical access list:
Node 2: [15, INF]; previous node: node 1.
Node 1: [0, INF]; previous node: null.

### The process of the fourth iteration:

The current node in the current access list is taken as a previous node. The access information related to the current node is removed from the current access list and added into the historical access list of this iteration; then, "node 3: [25, INF]; estimated earliest arrival time: 43 minutes; previous node: node 2" is added into the historical access list of this iteration.

The access information of nodes (node 6 and node 4) adjacent to the current node which is not included in the historical access list is added into the current access list. The access information includes an estimated time of arrival at the target node at the earliest, a legal time window and a previous node of the current node. That is, node 6: [37, INF]; estimated earliest arrival time: 67 minutes; previous node: node 3; and, node 4: [35, INF]; estimated earliest arrival time: 43 minutes; previous node: node 3.

The node having an estimated time of arrival at the target node always at the earliest is selected from the current access list, and taken as the current node. The current node is the node 4. The arrival time of the node 6 is later than that of the node 4, so the node 6 is not taken as the current node.

Therefore, after the fourth iteration finished, the current access list and the historical access list are as follows:
The current access list:
Node 6: [37, INF]; estimated earliest arrival time: 67 minutes; previous node: node 3.
Node 4: [35, INF]; estimated earliest arrival time: 43 minutes; previous node: node 3.

The historical access list:
Node 3: [25, INF]; previous node: node 2.
Node 2: [15, INF]; previous node: node 1.
Node 1: [0, INF]; previous node: null.

### The process of the fifth iteration:

The current node in the current access list is taken as a previous node. The access information related to the current node is removed from the current access list and added into the historical access list of this iteration; then, "node 4: [35, INF]; estimated earliest arrival time: 43 minutes; previous node: node 3" is added into the historical access list of this iteration.

The access information of nodes adjacent to the current node which is not included in the historical access list is added into the current access list. The access information includes an estimated time of arrival at the target node at the earliest, a legal time window and a previous node of the current node. That is, node 5: [43, INF]; estimated earliest arrival time: 43 minutes; previous node: node 5.

The node having an estimated time of arrival at the target node always at the earliest is selected from the current access list, and taken as the current node. The current node is node 6. The arrival time of node 6 is later than that of node 5, so node 6 is still not taken as the current node.

Therefore, after the fifth iteration finished, the current access list and the historical access list are as follows:
The current access list:
Node 6: [37, INF]; estimated earliest arrival time: 67 minutes; previous node: node 3.
Node 5: [43, INF]; estimated earliest arrival time: 43 minutes; previous node: node 5.

The historical access list:
Node 4: [35, INF]; previous node: node 3.
Node 3: [25, INF]; previous node: node 2.
Node 2: [15, INF]; previous node: node 1.
Node 1: [0, INF]; previous node: null.

### The process of the sixth iteration:

Since the current node (node 5) is the target node, the iteration ends and the planned path of vehicle X is output as follows: node 1: [0, 0]; node 2: [15, 15]; node 3: [25, 25]; node 4: [35, 35]; node 5: [43, 43].

Referring to FIG. 4, the locking time windows of nodes and the locking time windows of edges are updated according to respective times occupied of the nodes and the edges in the historical access lists of all vehicles having path planning completed. Each of the locking time window of a node and the locking time window of a edge is one or more time intervals respectively. An interval of the locking time window of the node is [max(a-c, 0), b+c], where the a is a starting time when occupation of the node is started, the b is an end time when occupation of the node is ended, and the c is a preset time resolution, 0≤c≤10. In this embodiment, c=1. The interval of the locking time window of the edge is [max(0, d-e), f], where the d is a starting time when occupation of the node is started, the e is a passing time required for passing through the edge, and the f is an end time when occupation of the node is ended. After the planned path is confirmed, the operation of the locking time window is performed. The situation of the locking time window is as follows: edge 12 represents the edge between node 1 and node 2, similarly, edge 23 represents the edge between node 2 and node 3, which will not be repeated later.
Node 1: [0, 1]
Edge 12: [0, 15]
Node 2: [14, 16]
Edge 23: [5, 25]
Node 3: [24, 26]
Edge 34: [15, 35]
Node 4: [34, 36]
Edge 45: [27, 43]
Node 5: [42, 44]

The calculation process of node 2 and edge 23 is taken as an example.

The locking time window of node 2 is [max (a-c, 0), b + c] = [max (15-1, 0), 15 + 1] = [14, 16].

The locking time window of edge 23 is [max(0, d-e), f]=[max(0, 15-10), 25]=[5, 25].

In this disclosure, a union set of all the respective times of occupying the nodes in the historical access list of all vehicles having path planning completed is taken as the updated locking time window of the node. A union set of all respective times of occupying the edges in the historical access list of all vehicles having path planning completed is taken as the updated locking time window of the edge. The basic idea by recording the time window-based multi-vehicle path planning of the present disclosure is to calculate the shortest path to the destination for each of the vehicles in sequence, record the times at which the vehicles access the nodes, and then superimpose all the paths and the access times to prevent the vehicles from conflicting during driving.

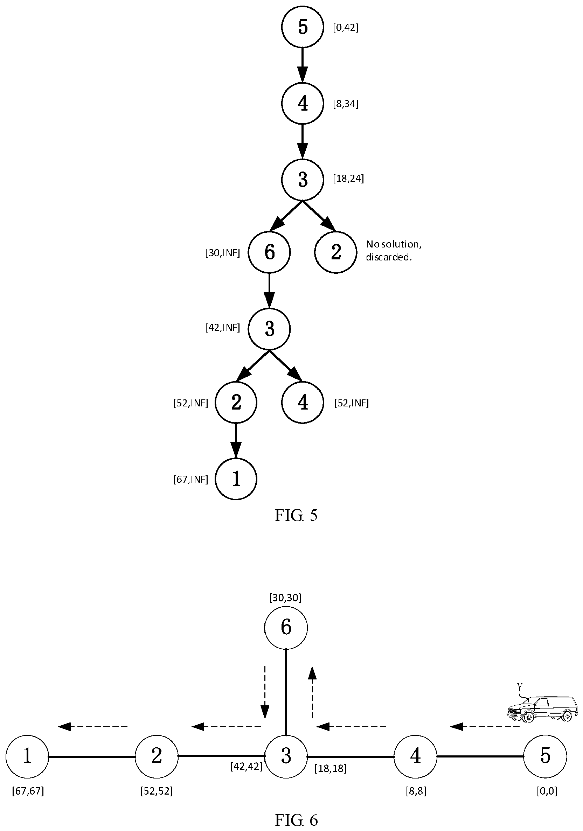

Referring to FIG. 5, moving to the target node from the starting node according to a starting node, a target node and locking time windows of the nodes of a vehicle Y for which the path planning is required, a current access list and a historical access list of sequentially passing through each node from the starting node are obtained. The current access list is used to record a time of arrival at the target node at the earliest, a legal time window, and a previous node based on a current node for the vehicle, where the legal time window is a time interval or a union set of a plurality of time intervals. If the time interval of the legal time window is included in a time interval of the locking time window of the node, then this node is discarded. Each previous node in the historical access list is output sequentially as path planning.

The vehicle Y moves from the starting node to the target node by a plurality of iterations, which includes the following steps.

### The first iteration:

The current node in the current access list is taken as a previous node. The access information related to the current node is removed from the current access list and added into the historical access list of this iteration. The current node is empty, such that the historical access list is empty.

The access information related to nodes adjacent to the current node is obtained and added into the current access list. The access information includes a legal time window, a previous node, and an estimated time of arrival at the target node at the earliest of the current node. The legal time window is a time interval, if the time interval of the legal time window is included in a time interval of the locking time window of the node, then the corresponding current node is discarded. The "Node 5: [0, 42]; estimated earliest arrival time: 43 minutes; previous node: null." is added into the current access list.

The node having an estimated time of arrival at the target node always at the earliest is selected from the current access list, and taken as the current node. The node 5 is taken as the current node.

Therefore, after the first iteration finished, the current access list and the historical access list are as follows:
The current access list:
Node 5: [0, 42]; estimated earliest arrival time: 43 minutes; previous node: null.

The historical access list is empty.

### The second iteration:

The current node in the current access list is taken as a previous node. The access information related to the current node is removed from the current access list and added into the historical access list of this iteration. The "Node 5: [0, 42]; estimated earliest arrival time: 43 minutes; previous node: null." is added into the historical access list of this iteration.

The access information related to nodes adjacent to the current node is obtained and added into the current access list. The access information includes a legal time window, a previous node, and an estimated time to arrive at the target node at the earliest of the current node. The legal time window is a time interval, if the time interval of the legal time window is included in a time interval of the locking time window of the node, then the corresponding current node is discarded. The "Node 4: [8, 34]; estimated arrival time: 43 minutes; previous node: node 5." is added into the current access list.

The node having an estimated time of arrival at the target node always at the earliest is selected from the current access list, and taken as the current node. The node 4 is taken as the current node.

Therefore, after the second iteration finished, the current access list and the historical access list are as follows.

The current access list:
Node 4: [8, 34]; estimated arrival time: 43 minutes; previous node: node 5.

The historical access list:
Node 5: [0, 42]; previous node: null.

### The third iteration:

The current node in the current access list is taken as a previous node. The access information related to the current node is removed from the current access list and added into the historical access list of this iteration. The "Node 4: [8, 34]; estimated arrival time: 43 minutes; previous node: node 5." is added into the historical access list of this iteration. In the present disclosure, an array is used to store the time window, namely Arrary [n], where Array [i] is used to store the time window that has been accessed in the i-th node. When the vehicle Y arrives at node 4 and looks for the next node, there are actually two possibilities, that is, vehicle Y can move to node 3 or node 5. Since its legal time window has been stored in Array [5] when the vehicle Y starts from node 5, that is, Array [5] contains the interval [0, 42]. Then if we want to go back to node 5 after arriving at node 4, the legal time window is [16, 42], however, this time window is completely included in the time window owned by Array [5], thus the node 5 is not considered.

The access information related to nodes adjacent to the current node is obtained and added into the current access list. The access information includes a legal time window, a previous node, and an estimated time of arrival at the target node at the earliest of the current node. The legal time window is a time interval, if the time interval of the legal time window is included in a time interval of the locking time window of the node, then the corresponding current node is discarded. The "Node 3: [18, 24]; estimated arrival time: 43 minutes; previous node: node 4." is added into the current access list.

The node having an estimated time of arrival at the target node always at the earliest is selected from the current access list, and taken as the current node. The node 3 is taken as the current node.

Therefore, after the second iteration finished, the current access list and the historical access list are as follows:

The current access list:
Node 3: [18, 24]; estimated arrival time: 43 minutes; previous node: node 4.

The historical access list:
Node 4: [8, 34]; previous node: node 5.
Node 5: [0, 42]; previous node: null.

### The fourth iteration:

The current node in the current access list is taken as a previous node. The access information related to the current node is removed from the current access list and added into the historical access list of this iteration. The "Node 3: [18, 24]; estimated arrival time: 43 minutes; previous node: node 4." is added into the historical access list of this iteration.

The access information related to nodes adjacent to the current node is obtained and added into the current access list. The access information includes a legal time window, a previous node, and an estimated time to arrive at the target node at the earliest of the current node. The legal time window is a time interval, if the time interval of the legal time window is included in a time interval of the locking time window of the node, then the corresponding current node is discarded. The "Node 2: there is no legal time window; previous node: node 4." and "Node 6: [30, INF]; estimated arrival time: 67 minutes; previous node: node 3." are added into the current access list. (The time window of node 2 is [28, 14], which does not meet the definition of the interval, so node 2 has no legal time window, that is, it will collide with the previously planned vehicle X on the same road at the same time.)

The node having an estimated time of arrival at the target node always at the earliest is selected from the current access list, and taken as the current node. The node 6 is taken as the current node.

Therefore, after the second iteration finished, the current access list and the historical access list are as follows.

The current access list:
Node 2: there is no legal time window; previous node: node 4.
Node 6: [30, INF]; estimated arrival time: 67 minutes; previous node: node 3.

The historical access list:
Node 3: [18, 24]; estimated arrival time: 43 minutes; previous node: node 4.
Node 4: [8, 34]; previous node: node 5.
Node 5: [0, 42]; previous node: null.

### The fifth iteration:

The current node in the current access list is taken as a previous node. The access information related to the current node is removed from the current access list and added into the historical access list of this iteration. The "Node 6: [30, INF]; estimated arrival time: 67 minutes; previous node: node 3." is added into the historical access list of this iteration. After vehicle Y arrives at node 6, it returns to node 3 again. This is because the previous Array [3] only contains the interval [18, 24], so the interval [42, INF] is not included in Array [3], which determines that we can put node 3 into the access list, and update Array [3] to make Array [3] include [18, 24] U [42, INF].

The access information related to nodes adjacent to the current node is obtained and added into the current access list. The access information includes a legal time window, a previous node, and an estimated time of arrival at the target node at the earliest of the current node. The legal time window is a time interval, if the time interval of the legal time window is included in a time interval of the locking time window of the node, then the corresponding current node is discarded. The "Node 3: [42, INF]; estimated arrival time: 67 minutes; previous node: node 6." is added into the current access list.

The node having an estimated time of arrival at the target node always at the earliest is selected from the current access list, and taken as the current node. The node 3 is taken as the current node.

Therefore, after the second iteration finished, the current access list and the historical access list are as follows:
The current access list:
Node 3: [42, INF]; estimated arrival time: 67 minutes; previous node: node 6.

The historical access list:
Node 6: [30, INF]; previous node: node 3.
Node 3: [18, 24]; previous node: node 4.
Node 4: [8, 34]; previous node: node 5.
Node 5: [0, 42]; previous node: null.

### The sixth iteration:

The current node in the current access list is taken as a previous node. The access information related to the current node is removed from the current access list and added into the historical access list of this iteration. The "Node 3: [42, INF]; estimated arrival time: 67 minutes; previous node: node 6." is added into the historical access list of this iteration.

The access information related to nodes adjacent to the current node is obtained and added into the current access list. The access information includes a legal time window, a previous node, and an estimated time of arrival at the target node at the earliest of the current node. The legal time window is a time interval, if the time interval of the legal time window is included in a time interval of the locking time window of the node, then the corresponding current node is discarded. The "node 2: [52, INF]; estimated arrival time: 67 minutes; previous node: node 3." and "node 4: [52, INF]; estimated arrival time: 87 minutes; previous node: node 3." are added into the current access list.

The node having an estimated time of arrival at the target node always at the earliest is selected from the current access list, and taken as the current node. The node 2 is taken as the current node.

Therefore, after the second iteration finished, the current access list and the historical access list are as follows:
The current access list:
Node 2: [52, INF]; estimated arrival time: 67 minutes; previous node: node 3.
Node 4: [52, INF]; estimated arrival time: 87 minutes; previous node: node 3.

The historical access list:
Node 3: [42, INF]; estimated arrival time: 67 minutes; previous node: node 6.
Node 6: [30, INF]; previous node: node 3.
Node 3: [18, 24], [42, INF]; previous node: node 6.
Node 4: [8, 34]; previous node: node 5.
Node 5: [0, 42]; previous node: null.

### The seventh iteration:

The current node in the current access list is taken as a previous node. The access information related to the current node is removed from the current access list and added into the historical access list of this iteration. The "Node 2: [52, INF]; estimated arrival time: 67 minutes; previous node: node 3." is added into the historical access list of this iteration.

The access information related to nodes adjacent to the current node is obtained and added into the current access list. The access information includes a legal time window, a previous node, and an estimated time of arrival at the target node at the earliest of the current node. The legal time window is a time interval, if the time interval of the legal time window is included in a time interval of the locking time window of the node, then the corresponding current node is discarded. The "Node 1: [67, INF]; estimated arrival time: 67 minutes; previous node: node 2." is added into the current access list.

The node having an estimated time of arrival at the target node always at the earliest is selected from the current access list, and taken the current node. The node 1 is taken as the current node.

Therefore, after the second iteration finished, the current access list and the historical access list are as follows:
The current access list:
Node 1: [67, INF]; estimated arrival time: 67 minutes; previous node: node 2.
Node 4: [52, INF]; estimated arrival time: 87 minutes; previous node: node 3.

The historical access list:
Node 2: [52, INF]; estimated arrival time: 67 minutes; previous node: node 3.
Node 3: [42, INF]; estimated arrival time: 67 minutes; previous node: node 6.
Node 6: [30, INF]; previous node: node 3.
Node 3: [18, 24], [42, INF]; previous node: node 6.
Node 4: [8, 34]; previous node: node 5.
Node 5: [0, 42]; previous node: null.

### The process of the eighth iteration:

Since the current node (node 1) is the target node, the iteration ends. Referring to FIG. 6, the planned path of vehicle Y is output as follows: node 5: [0, 0]; node 4: [8, 8]; node 3: [18, 18]; node 2: [52, 52]; node 1: [67, 67].

Since vehicle Y is the last vehicle that needs to be planned, the process of locking time window is no longer performed, and all previous locking information is cleared. The path planning of vehicle X and vehicle Y has been completed by the above steps.

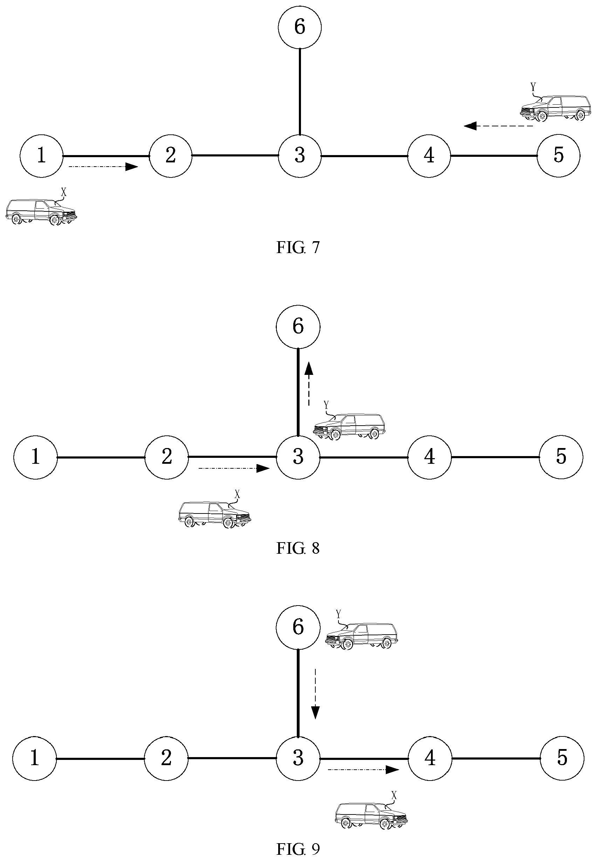

Referring to FIGS. 7 to 10, with the method of obtaining the path planning of vehicle X and vehicle Y according to the present disclosure, the avoidance of vehicle Y is realized on the path where a conflict might occurs (vehicle Y from node 3 to node 6 to node 3) by avoiding the time window where a conflict occurs, such that vehicle X can pass through the edge 23 by taking advantage of this time window. Similarly, if a third vehicle is added, the third vehicle can also avoid the time window of the paths of vehicle X and vehicle Y. The time window-based multi-vehicle path planning method of the present disclosure can effectively prevent different vehicles from conflicting in multi-vehicle path planning. Thus, the passing efficiency of the road network is improved and the safety is guaranteed.

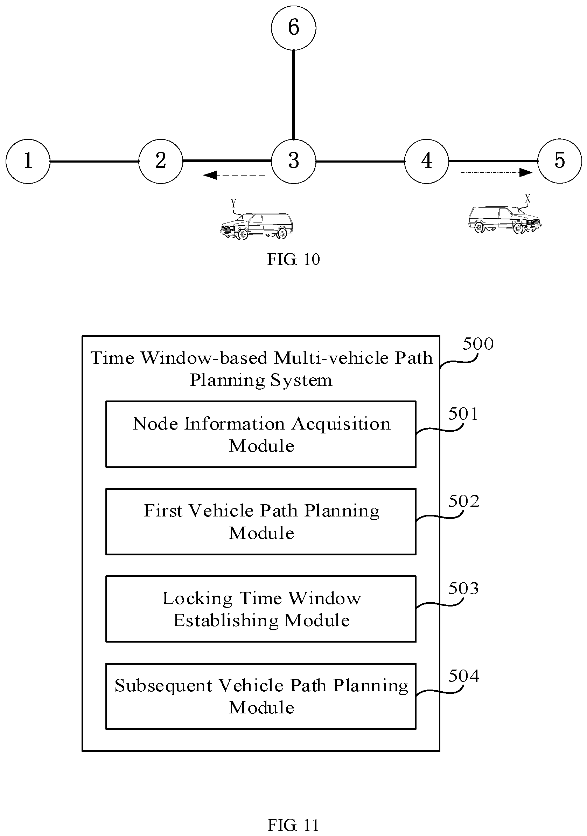

FIG 11 is a schematic module diagram of a time window-based multi-vehicle path planning system of the present disclosure. As shown in FIG. 11, a time window-based multi-vehicle path planning system for implementing the above time window-based multi-vehicle path planning method is further provided by an embodiment of the present disclosure. The time window-based multi-vehicle path planning system 500 includes a node information acquisition module 501, a first vehicle path planning module 502, a locking time window establishing module 503, and a subsequent vehicle path planning module 504.

The node information acquisition module 501 is configured to traverse each edge between adjacent nodes in a road network node map, to obtain a passing time of passing through each edge and a shortest estimated distance between any two nodes in the map.

The first vehicle path planning module 502 is configured to: move, according to a starting node and a target node for a first vehicle, from the starting node to the target node through the edge along a path of a corresponding shortest estimated distance, to obtain a current access list and a historical access list of sequentially passing through each node from the starting node, the current access list being used to record a time of arrival at the target node at the earliest, a legal time window, and a previous node based on a current node for the vehicle, the legal time window being a time interval; and output each previous node in the historical access list sequentially as path planning of the first vehicle.

The locking time window building module 503 is configured to update, according to respective times of occupying the node and the edge in historical access lists of all vehicles having path planning completed, a locking time window of the node and a locking time window of the edge. Each of the locking time window of a node and the locking time window of a edge is one or more time intervals respectively.

The subsequent vehicle path planning module 504 is configured to: move, according to a starting node and a target node for a next vehicle requiring path planning and the locking time window of the node obtained in the locking time window establishing module, from the starting node to the target node, to obtain a current access list and a historical access list of sequentially passing through each node from the starting node, the current access list being used to record a time of arrival at the target node at the earliest, a legal time window, and a previous node based on a current node for the vehicle, the legal time window being a time interval or a union set of a plurality of time intervals; discard the node, if the time interval of the legal time window is included in a time interval of the locking time window of the node; output each previous node in the historical access list sequentially as path planning; and execute repeatedly until the path planning have been completed for all vehicles.

The time window-based multi-vehicle path planning system of the present disclosure can effectively prevent different vehicles from conflicting in multi-vehicle path planning. Thus, the passing efficiency of the road network is improved and the safety is guaranteed.

A time window-based multi-vehicle path planning device is further provided in an embodiment of the present disclosure. The device includes a processor, and a memory in which executable instructions of the processor are stored. The processor is configured to implement the steps of the time window-based multi-vehicle path planning method by executing the executable instructions.

As above, the time window-based multi-vehicle path planning device of the present disclosure can effectively prevent different vehicles from conflicting in multi-vehicle path planning. Thus, the passing efficiency of the road network is improved and the safety is guaranteed.

Those skilled in the art can understand that various aspects of the present disclosure can be implemented as a system, a method, or a program product. Therefore, various aspects of the present disclosure may be specifically implemented in the following form of: a complete hardware implementation, a complete software implementation (including firmware, microcode, etc.), or an implementation of a combination of hardware aspect and software aspect, which may be collectively referred to herein as "circuit", "module", or "platform".

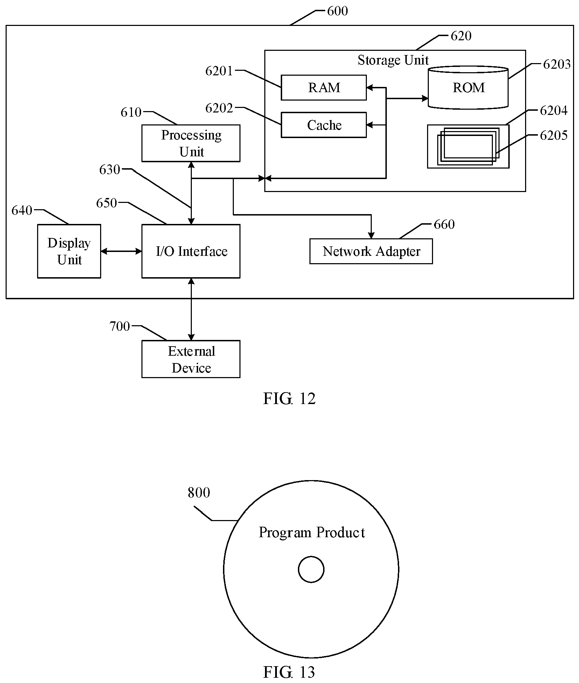

FIG 12 is a schematic structure diagram of a time window-based multi-vehicle path planning device of the present disclosure. An electronic device 600 according to this implementation of the present disclosure will be described below with reference to FIG. 12. The electronic device 600 shown in FIG. 12 is only an example, and should not bring any limitation to the functions and use scope of the embodiments of the present disclosure.

As shown in FIG. 12, the electronic device 600 is shown in a form of a general-purpose computing device. Components of the electronic device 600 may include, but are not limited to: at least one processing unit 610, at least one storage unit 620, a bus 630 connecting different platform components (including a storage unit 620 and a processing unit 610), a display unit 640, and the like.

The storage unit stores program code, and the program code can be executed by the processing unit 610, such that the processing unit 610 executes the steps according to various exemplary embodiments of the present disclosure described in the section of the above electronic processing flow of this specification. For example, the steps shown in FIG. 1 may be performed by the processing unit 610.

The storage unit 620 may include a readable medium in the form of a volatile storage unit, such as a Random Access Memory (RAM) 6201 and/or a cache storage unit 6202, and may further include a Read Only Memory (ROM) 6203.

The storage unit 620 may further include a program/utility tool 6204 having a set of (at least one) program modules 6205. Such program modules 6205 include but are not limited to: an operating system, one or more application programs, other program modules, and program data. Each or a certain combination of these examples may include an implementation of the network environment.

The bus 630 may be one or more of several types of bus structures, including a storage unit bus or a storage unit controller, a peripheral bus, a graphics acceleration port, a processing unit, or a local bus with any of a variety of bus structures.

The electronic device 600 may also communicate with one or more external devices 700 (such as a keyboard, a pointing device, a Bluetooth device, etc.), and may also communicate with one or more devices that enable a user to interact with the electronic device 600, and/or communicate with any device (e.g., router, modem, etc.) that enables the electronic device 600 to communicate with one or more other computing devices. Such communication may be performed through an input/output (I/O) interface 650. Moreover, the electronic device 600 may also communicate with one or more networks (such as a Local Area Network (LAN), a Wide Area Network (WAN), and/or a public network, such as the Internet) through a network adapter 660. The network adapter 660 may communicate with other modules of the electronic device 600 through the bus 630. It should be understood that although not shown in the figures, other hardware and/or software modules may be used in combination with the electronic device 600, including but not limited to: microcode, device driver, redundant processing unit, external disk drive array, RAID system, tape drive, and data backup storage platform, etc.

A computer readable storage medium configured to store program is further provided by an embodiment of the present disclosure, and the steps of the time window-based multi-vehicle path planning method are implemented when the program is executed. In some possible implementations, various aspects of the present disclosure may also be implemented in the form of a program product, which includes program code, and when the program product runs on a terminal device, the program code is configured to cause the terminal device to execute the steps according to various exemplary embodiments of the present disclosure described in the section of the above electronic processing flow of this specification.

As shown above, when the program of the computer readable storage medium of this embodiment is executed, it can effectively prevent different vehicles from conflicting in multi-vehicle path planning. Thus, the passing efficiency of the road network is improved and the safety is guaranteed.

FIG. 13 is a schematic structural diagram of a computer readable storage medium of the present disclosure. Referring to FIG. 13, a program product 800 for implementing the above method according to an embodiment of the present disclosure is described, which may be a portable compact disk read-only memory (CD-ROM) and include program codes, and may run on a terminal device such as a personal computer. However, the program product of the present disclosure is not limited thereto. In this disclosure, the readable storage medium may be any tangible medium containing or storing a program, and this program may be used by or in combination with an instruction execution system, apparatus, or device.

The program product may be any combination of one or more readable mediums. The readable medium may be a readable signal medium or a readable storage medium. The readable storage medium may be, for example but not limited to, an electrical, magnetic, optical, electromagnetic, infrared, or semiconductor system, equipment, or device, or any combination of the above. More specific examples of the readable storage medium (non-exhaustive list) include: an electrical connection with one or more wires, a portable disk, a hard disk, Random Access Memory (RAM), Read Only Memory (ROM), Erasable Programmable Read-Only Memory (EPROM or flash memory), optical fiber, portable Compact Disk Read-Only Memory (CD-ROM), optical storage device, magnetic storage device, or any suitable combination of the above.

The computer-readable storage medium may include a data signal in baseband or propagated as part of a carrier wave, in which readable program code is carried. This propagated data signal can be in many forms, including but not limited to an electromagnetic signal, an optical signal, or any suitable combination of the above. The readable storage medium may also be any readable medium other than the readable storage medium, and this readable medium may send, propagate, or transmit a program to be used by or in combination with the instruction execution system, apparatus, or device. The program code contained on the readable storage medium may be transmitted on any appropriate medium, including but not limited to wireless, wired, optical cable, RF, etc., or any suitable combination of the above.

The program code for performing the operations of the present disclosure can be written in any combination of one or more programming languages. The programming language includes object-oriented programming languages such as Java, C++, etc., and also includes conventional procedural programming languages such as "C" language or similar programming language. The program code may be executed entirely on a user computing device, partly on a user device, as an independent software package, partly on a user computing device and partly on a remote computing device, or entirely on a remote computing device or server. In situations involving a remote computing device, the remote computing device may be connected to a user computing device through any kind of network, including Local Area Network (LAN) or Wide Area Network (WAN), or may be connected to an external computing device (for example, to be connected via the Internet by an Internet service provider).

In conclusion, the time window-based multi-vehicle path planning method, system, device, and storage medium of the present disclosure can effectively prevent different vehicles from conflicting in multi-vehicle path planning. Thus, the passing efficiency of the road network is improved and the safety is guaranteed.

The above are further illustration of the present disclosure with reference to specific embodiments, and should not be deemed as limitations to the scope of the present disclosure. For those skilled in the art to which the present disclosure pertains, several simple deductions or replacements can be further made without departing from the concept of the present disclosure, and these are all should be construed as falling within the protection scope of the present disclosure.

## Claims

1. A time window-based multi-vehicle path planning method, **characterized by** comprising the following steps:
S101, traversing each edge between adjacent nodes in a road network node map, to obtain a passing time of passing through each edge and a shortest estimated distance between any two nodes in the map;
S102, moving, according to a starting node and a target node for a first vehicle, from the starting node to the target node through the edge along a path of a corresponding shortest estimated distance, to obtain a current access list and a historical access list of sequentially moving through each node from the starting node, the current access list being used to record a time of arrival at the target node at the earliest, a legal time window, and a previous node based on a current node for the vehicle, wherein the legal time window is a time interval; and outputting each previous node in the historical access list sequentially as path planning for the first vehicle;
S103, updating, according to respective times of occupying the node and the edge in historical access lists of all vehicles having path planning completed, a locking time window of the node and a locking time window of the edge, wherein each of the locking time window of the node and the locking time window of the edge is one or more time intervals respectively;
S104, moving, according to a starting node and a target node for a next vehicle requiring path planning and the locking time window of the node obtained in the step S103, from the starting node to the target node, to obtain a current access list and a historical access list of sequentially moving through each node from the starting node, the current access list being used to record a legal time window, a previous node, and a time of arrival at the target node at the earliest based on a current node for the vehicle, the legal time window being a time interval or a union set of a plurality of time intervals, and if the time interval of the legal time window is included in a time interval of the locking time window of the node, then discarding this node; and outputting each previous node in the historical access list sequentially as path planning;
S105, determining whether there is yet a vehicle that requires path planning; if yes, returning to the step S104; if not, performing step S106; and
S106, end.

2. The time window-based multi-vehicle path planning method according to claim 1, **characterized in that**: in the step S102, the first vehicle moves to the target node through the edge along the corresponding shortest estimated distance from the starting node by a plurality of iterations, and each of the iterations comprises the following steps:
S1021, determining whether the current node is the target node; if yes, performing step S1025; if not, performing step S1022;
S1022, taking the current node in the current access list as the previous node, removing access information related to the current node from the current access list, and adding the access information related to the current node into the historical access list of this iteration;
S1023, adding access information of a node adjacent to the current node that is not included in the historical access list into the current access list, the access information including an estimated time of arrival at the target node at the earliest, a legal time window and a previous node of the current node;
S1024, selecting a node having an estimated time of arrival at the target node always at the earliest from the current access list, taking this node as the current node, and returning to the step S1021; and
S1025, outputting each previous node in the historical access list sequentially as the path planning of the first vehicle, and ending the iteration.

3. The time window-based multi-vehicle path planning method according to claim 1, **characterized in that**: in the step S102, the time interval of the legal time window is [g, h], where the g is a time of arrival at the current node at the earliest for the vehicle, and the h is a legal time of departure from the current node at the latest for the vehicle, wherein the g in the legal time window of each current node has a value equal to a time of moving from the previous node to this current node through an edge adjacent to the previous node, and the h has a value equal to positive infinity.

4. The time window-based multi-vehicle path planning method according to claim 1, **characterized in that**: in the step S103, an interval of the locking time window is [max(a-c, 0), b+c], where the a is a starting time when occupation of the node is started, the b is an end time when occupation of the node is ended, the c is a preset time resolution, and 0≤c≤10; the interval of the locking time window of the edges is [max(0, d-e), f], where the d is a starting time when occupation of the node is started, the e is a passing time required for passing through the edge, and the f is a terminal time when occupation of the edge is terminated.

5. The time window-based multi-vehicle path planning method according to claim 1, **characterized in that**: in the step S103, taking a union set of all respective times of occupying the node in the historical access lists of all vehicles having path planning completed as the updated locking time window of the node; and taking a union set of all respective times of occupying the edge in the historical access lists of all vehicles having path planning completed as the updated locking time window of the edge.

6. The time window-based multi-vehicle path planning method according to claim 1, **characterized in that**: in the step S104, the vehicle moves through the edge from the starting node to the target node by a plurality of iterations, and each of the iterations comprises the following steps:
S1041, determining whether the current node is the target node or not; if yes, then performing step S 1045; if not, then performing step S1042;
S1042, taking the current node in the current access list as the previous node, removing access information related to the current node from the current access list, and adding the access information related to the current nod into the historical access list of this iteration;
S1043, obtaining access information related to a node adjacent to the current node and adding the access information into the current access list, the access information including an estimated time of arrival at the target node at the earliest, a legal time window, and a previous node of the current node, the legal time window being a time interval or a union set of a plurality of time intervals, and if the time interval of the legal time window is included in a time interval of the locking time window of the node, then discarding the corresponding current node;
S 1044, selecting a node having an estimated time of arrival at the target node always at the earliest from the current access list, taking this node as the current node, and returning to the step S1041; and
S1045, outputting each previous node in the historical access list sequentially as the path planning of the vehicle, and ending the iteration.

7. The time window-based multi-vehicle path planning method according to claim 6, **characterized in that**: the step S1042 further comprises: if there is no solution for the time interval of the legal time window of the current node, then deleting the current node from the current access list.

8. The time window-based multi-vehicle path planning method according to claim 1, **characterized in that**, in the step S1042, a time interval of the legal time window of the current node is obtained according to the starting node, the target node, and the time of arrival at the current node at the earliest of the vehicle, the time interval having one or more intervals [ji,ki], i=1,2,3...n, where the n is the number of the intervals; and a method of calculating the time interval comprises: firstly, obtaining the legal time window of the previous node of the current node, the locking time window of the edge adjacent to the current node and the previous node, and the locking time window of the current node; and then, calculating a difference set between the locking time window of the current node and a difference set between the legal time window of the previous node and the locking time window of the edge adjacent to the current node and the previous node.

9. The time window-based multi-vehicle path planning method according to claim 8, **characterized in that**: in the step S1042, if there is no legal time window in the legal time window of the current node, then deleting the current node from the current access list.

10. A time window-based multi-vehicle path planning system for implementing the time window-based multi-vehicle path planning method of any one of claims 1 to 9, **characterized in that**, the system comprises:
a node information acquisition module, configured to traverse each edge between adjacent nodes in a road network node map, to obtain a passing time of passing through each edge and a shortest estimated distance between any two nodes in the map;
a first vehicle path planning module, configured to: move, according to a starting node and a target node for a first vehicle, from the starting node to the target node through the edge along a path of a corresponding shortest estimated distance, to obtain a current access list and a historical access list of sequentially moving through each node from the starting node, the current access list being used to record a time of arrival at the target node at the earliest, a legal time window, and a previous node based on a current node for the vehicle, wherein the legal time window is a time interval; and output each previous node in the historical access list sequentially as path planning of the first vehicle;
a locking time window establishing module, configured to update, according to respective times of occupying the node and the edge in historical access lists of all vehicles having path planning completed, a locking time window of the node and a locking time window of the edge, wherein each of the locking time window of the node and the locking time window of the edge is one or more time intervals respectively;
a subsequent vehicle path planning module, configured to: move, according to a starting node and a target node for a next vehicle requiring path planning and the locking time window of the node obtained in the locking time window establishing module, from the starting node to the target node, to obtain a current access list and a historical access list of sequentially moving through each node from the starting node, the current access list being used to record a time of arrival at the target node at the earliest, a legal time window, and a previous node based on a current node of the vehicle, the legal time window being a time interval or a union set of a plurality of time intervals; discard the node, if the time interval of the legal time window is included in a time interval of the locking time window of the node; output each previous node in the historical access list sequentially as path planning; and execute repeatedly until the path planning have been completed for all vehicle.

11. A time window-based multi-vehicle path planning device, **characterized in that**, the device comprises:
a processor; and
a memory, on which executable instructions of the processor are stored,
wherein the processor is configured to implement the steps of the time window-based multi-vehicle path planning method of any one of claims 1 to 9 by executing the executable instructions.

12. A computer readable storage medium configured to store program, **characterized in that**, the steps of the time window-based multi-vehicle path planning method of any one of claims 1 to 9 are implemented when the program is executed.
